# EUROPÄISCHE PATENTANMELDUNG

(11) **EP 4 044 327 A1**
(43) Veröffentlichungstag der Anmeldung: **17.08.2022**
(21) Anmeldenummer: 21157331.6
(22) Anmeldetag: 16.02.2021
(51) Int. Cl.: H01M 12/06, H01M 12/08, H01M 50/109, H01M 50/124, H01M 50/129, H01M 50/131, H01M 50/138, H01M 50/148, H01M 50/16, H01M 50/164, H01M 50/545

(54) **METALL-LUFT-ZELLE UND VERFAHREN ZUR HERSTELLUNG**

(71) Anmelder: VARTA Microbattery GmbH, 73479 Ellwangen Jagst (DE)
(72) Erfinder: Kohls, Ulrich, 73460 Hüttlingen (DE)
(74) Vertreter: Ostertag & Partner Patentanwälte mbB

(57) **Zusammenfassung**

Eine Metall-Luft-Zelle (100) weist ein erstes Gehäuseteil (111) und ein zweites Gehäuseteil (112) auf, die gemeinsam ein Zellgehäuse (110) bilden. Die Metall-Luft-Zelle umfasst eine metallbasierte Anode (120) und eine schichtförmige Luftkathode (130) und einen Elektrolyten. Das erste Gehäuseteil (111) weist mindestens eine Luftdurchtrittsöffnung (114) auf. Zwischen dem ersten Gehäuseteil (111) und der Luftkathode (130) ist ein schichtförmiger Luftverteiler (140) angeordnet. Zwischen der Luftkathode (130) und der metallbasierten Anode (120) ist ein schichtförmiger Separator (150) angeordnet. Erfindungsgemäß ist der schichtförmige Luftverteiler (140) luftdurchlässig ausgebildet und weist eine erste, der Luftkathode (130) zugewandte Seite und eine zweite, der Luftkathode (130) abgewandte Seite auf, wobei der schichtförmige Luftverteiler (140) auf mindestens einer der Seiten eine hydrophobe Beschichtung aufweist.

## Beschreibung

Die vorliegende Erfindung betrifft eine Metall-Luft-Zelle, ein Verfahren zur Herstellung eines schichtförmigen Luftverteilers sowie die Verwendung eines schichtförmigen Luftverteilers zur Herstellung einer Metall-Luft-Zelle.

### ANWENDUNGSGEBIET UND STAND DER TECHNIK

Metall-Luft-Zellen enthalten als elektrochemische Aktivkomponenten üblicherweise eine metallbasierte Anode und eine Luftkathode, die durch einen Separator räumlich voneinander getrennt, gleichzeitig aber über einen ionenleitfähigen Elektrolyten miteinander verbunden sind. Der Separator ist üblicherweise mit dem Elektrolyten getränkt. Bei der Entladung wird an der Luftkathode Sauerstoff unter Elektronenaufnahme reduziert. Es entstehen Hydroxidionen, die über den Elektrolyten zur Anode wandern. Dort wird das Metall, auf dem die Anode basiert, unter Elektronenabgabe oxidiert. Die entstehenden Metallionen reagieren mit den Hydroxidionen ab.

Es existieren sowohl primäre als auch sekundäre Metall-Luft-Zellen. Eine primäre Metall-Luft-Zelle ist nicht wiederaufladbar. Eine sekundäre Metall-Luft-Zelle wird wieder aufgeladen, indem zwischen Anode und Luftkathode eine Spannung angelegt und die beschriebene elektrochemische Reaktion umgekehrt wird. Dabei wird Sauerstoff freigesetzt.

Das bekannteste Beispiel einer Metall-Luft-Zelle ist die Zink-Luft-Zelle. In Knopfzellenform findet diese insbesondere als Energiespeicherzelle für Hörgeräte Verwendung.

Metall-Luft-Zellen weisen eine sehr hohe Energiedichte auf, weil der Bedarf an Sauerstoff an der Luftkathode durch Luftsauerstoff aus der Umgebung gedeckt werden kann. Entsprechend muss der Luftkathode beim Entladevorgang Luftsauerstoff zugeführt werden. Umgekehrt muss beim Ladevorgang einer sekundären Metall-Luft-Zelle an der Luftkathode entstehender Sauerstoff abgeführt werden. Aus diesen Gründen weisen Metall-Luft-Zellen in der Regel Gehäuse auf, die mit entsprechenden Eintritts- bzw. Austrittsöffnungen versehen sind. In der Regel werden als Eintritts- bzw. Austrittsöffnungen Löcher in die Gehäuse eingebracht, beispielsweise eingestanzt.

Als Luftkathode kommen in Metall-Luft-Zellen üblicherweise Gasdiffusionselektroden zum Einsatz. Gasdiffusionselektroden sind Elektroden, in denen die an der elektrochemischen Reaktion beteiligten Stoffe (in der Regel ein Katalysator, ein Elektrolyt und Luftsauerstoff) nebeneinander in fester, flüssiger und gasförmiger Form vorliegen und miteinander in Kontakt treten können. Der Katalysator katalysiert die Reduktion des Luftsauerstoffs bei der Entladung und gegebenenfalls auch die Oxidation von Hydroxidionen bei der Ladung der Zellen.

Insbesondere in Metall-Luft-Zellen in Knopfzellenform kommen als Luftkathoden häufig kunststoffgebundene Gasdiffusionselektroden zum Einsatz. Solche Gasdiffusionselektroden sind beispielsweise in der DE 37 22 019 A1 beschrieben. In solchen Elektroden bildet ein Kunststoffbinder (z.B. Polytetrafluorethylen, kurz PTFE) eine poröse Matrixaus, in die Partikel auseinem elektrokatalytisch aktiven Material (zum Beispiel aus einem Edelmetallwie Platin oder Palladium oderaus einem Manganoxid) eingebettet sind. Das elektrokatalytisch aktive Material katalysiert die erwähnte Umsetzung von Luftsauerstoff. Die Herstellung solcher Elektroden erfolgt in aller Regel, indem eine Trockenmischung aus dem Binder und dem Katalysator zu einer Folie ausgewalzt wird. Die Trockenmischung kann zum Beispiel in ein Netz oder Streckgitter aus Silber, Nickel oder versilbertem Nickel eingewalzt werden. Das Metallnetz oder das Streckgitter bildet eine Ableiterstruktur innerhalb der Elektrode und dient als Stromableiter.

Wird nun in einer derartigen Luftkathode Sauerstoff reduziert, so können die dabei freigesetzten Elektronen über die erwähnte Ableiterstruktur abgeführt werden. Diese steht bevorzugt in unmittelbarem und elektrischem Kontakt mit einem Teil des Gehäuses, das als Pol der Zelle dient.

Die erwähnte(n) Eintritts- bzw. Austrittsöffnung(en) für Sauerstoff sind in aller Regel in den Boden des Gehäuses einer Metall-Luft-Zelle eingebracht, insbesondere, wenn es sich hierbei um eine Knopfzelle handelt. Damit der durch die Öffnung(en) eintretende Sauerstoff möglichst unmittelbar in Kontakt mit der Luftkathode treten kann, ist die Luftkathode in solchen Zellen üblicherweise flach auf dem Gehäuseboden positioniert, so dass sie die Öffnung(en) abdeckt. Oftmals ist es vorgesehen, dass zwischen der Luftkathode und dem Gehäuseboden ein schichtförmiger Luftverteiler vorgesehen ist, beispielsweise ein poröses Filterpapier.

Die GB 2109 622 B beschreibt eine Zink-Luft-Zelle in Knopfzellenform. Unterhalb der Luftkathode ist eine PTFE-Membran vorgesehen ist, die zusammen mit der Luftkathode ein Laminat ausbildet. Zwischen diesem Laminat und dem Gehäuseboden mit der Luftdurchtrittsöffnung ist eine poröse Luftdiffusionsscheibe aus Filterpapier vorgesehen, sodass die eintretende Luft sich über die Fläche verteilt und ein über die Fläche verteilter Zugang der Luft zur Kathode erreicht wird.

Aus der WO 01/93366 A1 ist ein ähnlicher Aufbau einer Zink-Luft-Zelle bekannt. Auch hier ist die Luftkathode als Laminat mit einer PTFE-Membran ausgebildet. Zwischen der gasdurchlässigen PTFE-Membran des Laminats und dem Gehäuseboden mit der Luftzutrittsöffnung ist eine Luftverteilerschicht vorgesehen.

Es ist bei Metall-Luft-Zellen oftmals problematisch, dass vor allem bei Entladungen unter Hochfeuchtebedingungen es dazu kommen kann, dass die Zellen während oder nach der Entladung über die Luftdurchtrittsöffnungen auslaufen. Dies hat den Hintergrund, dass der hygroskopische Elektrolyt das gasförmige Wasser aus der Umgebungsluft aufnimmt. Je höher die Luftfeuchtigkeit ist, desto mehr Wasser nimmt der Elektrolyt auf. Durch diese Wasseraufnahme steigt der Binnendruck in der Metall-Luft-Zelle bis zu einem Punkt, an welchem die hydrophobe PTFE-Membran des Luftkathodenlaminats den wässrigen Elektrolyten nicht mehr ausreichend abweisen kann. Dies hat zur Folge, dass der Elektrolyt durch die Membran gepresst wird. Sobald der Elektrolyt die PTFE-Membran in Richtung der Luftdurchtrittsöffnung am Boden des Gehäuses durchdrungen hat, saugt sich die poröse Luftverteilerschicht, also beispielsweise ein Luftverteilerpapier, mit dem Elektrolyt voll und die Zellen laufen über die Luftdurchtrittsöffnungen aus.

Die WO 2006/098718 A1 beschreibt eine Metall-Luft-Zelle, bei der zwischen einem Luftkathoden-Laminat mit hydrophober Membran und einer Luftverteilerschicht aus porösem Material, beispielsweise aus Papier, eine weitere PTFE-Membran vorgesehen ist.

Die WO 2008/051508 A2 hat eine Metall-Luft-Zelle zum Gegenstand, bei der ebenfalls eine Luftkathode mit laminierter PTFE-Membran vorgesehen ist. Zwischen dem Gehäuseboden und dem Luftkathodenlaminat ist eine Luftverteilerschicht vorgesehen, die aus porösem Papier oder Fasern ausgebildet sein kann. In alternativen Ausführungsformen kann die Luftverteilerschicht eine luftdurchlässige, hydrophobe PTFE-Membran sein.

### AUFGABE UND LÖSUNG

Die genannten Ansätze aus dem Stand der Technik lösen das Problem des möglichen Auslaufens der Metall-Luft-Zellen jedoch nicht in befriedigender Weise. Daher stellt sich die Erfindung die Aufgabe, eine Metall-Luft-Zelle bereitzustellen, bei der auf der einen Seite ein Auslaufen des Elektrolyten zuverlässig vermieden wird und bei der auf der anderen Seite eine optimale Funktionsfähigkeit der Metall-Luft-Zelle gegeben ist. Weiterhin soll eine kostengünstige Lösung bereitgestellt werden, die sich beispielsweise auch für eine Massenproduktion von Metall-Luft-Zellen in wirtschaftlicher Weise eignet.

Zur Lösung dieser Aufgabe schlägt die Erfindung eine Metall-Luft-Zelle mit den in Anspruch 1 genannten Merkmalen vor. Weiterhin wird die Aufgabe durch ein Verfahren zur Herstellung eines schichtförmigen Luftverteilers und dessen Verwendung zur Herstellung einer Metall-Luft-Zelle gelöst. Bevorzugte Ausgestaltungen der Metall-Luft-Zelle und des Verfahrens zur Herstellung eines schichtförmigen Luftverteilers und dessen Verwendung zur Herstellung einer Metall-Luft-Zelle ergeben sich aus den abhängigen Ansprüchen.

Die Metall-Luft-Zelle gemäß der Erfindung zeichnet sich zunächst durch die folgenden Merkmale a. bis e. aus:
a. Die Metall-Luft-Zelle weist ein erstes Gehäuseteil und ein zweites Gehäuseteil auf, die gemeinsam ein Zellgehäuse bilden; und
b. die Metall-Luft-Zelle umfasst eine metallbasierte Anode und eine schichtförmige Luftkathode und einen Elektrolyten; und
c. das erste Gehäuseteil weist mindestens eine Luftdurchtrittsöffnung auf; und
d. zwischen dem ersten Gehäuseteil und der Luftkathode ist ein schichtförmiger Luftverteiler angeordnet; und
e. zwischen der Luftkathode und der metallbasierten Anode ist ein schichtförmiger Separator angeordnet.

Besonders zeichnet sich die Zelle durch die folgenden Merkmale f. und g. aus:
f. Der schichtförmige Luftverteiler ist luftdurchlässig ausgebildet und weist eine erste, der Luftkathode zugewandte Seite und eine zweite, der Luftkathode abgewandte Seite auf; und
g. der schichtförmige Luftverteiler weist auf mindestens einer der Seiten eine hydrophobe Beschichtung auf.

Durch den schichtförmigen Luftverteiler, der einerseits luftdurchlässig ist und damit eine optimale Verteilung der eintretenden Luft über die Fläche der Metall-Luft-Zelle ermöglicht, und der andererseits eine hydrophobe Beschichtung aufweist, die einen Durchtritt des Elektrolyten verhindert, kann eine Metall-Luft-Zelle bereitgestellt werden, bei der ein Auslaufen der Zelle zuverlässig verhindert wird oder zumindest auch unter extremen Bedingungen lange herausgezögert werden kann. Die hydrophobe Beschichtung ist dabei so ausgebildet, dass eine ausreichende Luftdurchlässigkeit gewährleistet ist, so dass die Zelle mit ausreichend Luftsauerstoff versorgt werden kann und die optimale Funktionsfähigkeit erhalten bleibt. Durch die hydrophobe Beschichtung wird zuverlässig vermieden, dass der Luftverteiler sich mit Elektrolyt im Sinne einer Dochtwirkung vollsaugt und den Elektrolyt in Richtung der Luftdurchtrittsöffnung(en) zieht. Die hydrophobe Beschichtung des Luftverteilers hält den Elektrolyten von den Luftdurchtrittsöffnungen des Gehäuses fern und die Zelle läuft gar nicht oder unter extremen Bedingungen, verglichen mit herkömmlichen Metall-Luft-Zellen, erst sehr spät über die Luftdurchtrittsöffnungen aus. So kann bei der Verwendung der erfindungsgemäßen Metall-Luft-Zellen beispielsweise in Hörgeräten vermieden werden, dass die Geräte durch ausgelaufenen Elektrolyten beschädigt werden.

Bis auf den beschichteten Luftverteiler kann die erfindungsgemäße Metall-Luft-Zelle prinzipiell wie eine herkömmliche Metall-Luft-Zelle aufgebaut sein. Insbesondere kann die erfindungsgemäße Metall-Luft-Zelle eine an sich übliche metallhaltige Anode, eine übliche Luftkathode und einen üblichen, zwischen der Anode und der Luftkathode angeordneten Separator aufweisen. Beispielsweise eignen sich die eingangs beschriebenen Gasdiffusionselektroden als Luftkathode für die erfindungsgemäße Metall-Luft-Zelle. Als Elektrolyten für die erfindungsgemäße Metall-Luft-Zelle eignen sich beispielsweise herkömmliche wässrige Elektrolytlösungen, insbesondere alkalische wässrige Lösungen. Als Separator eignen sich beispielsweise ein mit Elektrolyt getränktes Vlies oder eine mit Elektrolyt getränkte poröse Kunststofffolie.

Die mindestens eine Luftdurchtrittsöffnung, die im Gehäuse der erfindungsgemäßen Metall-Luft-Zelle vorgesehen ist, sorgt wie auch bei herkömmlichen Metall-Luft-Zellen dafür, dass der Luftsauerstoff in das Zellgehäuse der Metall-Luft-Zelle eindringen kann. Je nach Größe und Dimension der Luftdurchtrittsöffnung kann eine Öffnung als Luftdurchtrittssöffnung ausreichend sein. Es können jedoch auch mehrere Luftdurchtrittsöffnungen vorgesehen sein, beispielsweise zwei bis zehn Öffnungen oder, besonders bevorzugt, zwei bis fünf Öffnungen.

Durch die hydrophobe Beschichtung des luftdurchlässigen Luftverteilers wird im Vergleich mit herkömmlichen Metall-Luft-Zellen, die entweder eine Luftverteilerschicht in Form eines porösen Filterpapiers oder Ähnlichem oder eine PTFE-Membran als rein hydrophobes Material aufweisen, erreicht, dass eine optimale Verteilung der eintretenden Luft über die Fläche der Metall-Luft-Zelle erreicht wird und gleichzeitig zuverlässig ein Auslaufen des Elektrolyten vermieden wird.

Der beschichtete Luftverteiler gemäß der Erfindung muss nicht zwingend unmittelbar mit dem Gehäuse und/oder der Luftkathode verbunden sein. Es kann allerdings auch vorgesehen sein, dass der schichtförmige Luftverteiler innerhalb des Gehäuses der Zelle fixiert ist und beispielsweise in den Randbereichen mit dem Gehäuse verbunden ist, z.B. durch Verklebung.

In besonders vorteilhafter Weise handelt es sich bei der hydrophoben Beschichtung um eine Polytetrafluorethylen-Beschichtung (PTFE-Beschichtung). Besonders für die Zwecke der vorliegenden Erfindung geeignet sind unverzweigte, linear aufgebaute, teilkristalline PTFE-Varianten aus Fluor und Kohlenstoff. PTFE ist hydrophob und damit wasserabweisend. Darüber hinaus ist es äußerst beständig gegenüber verschiedenen Chemikalien, so dass es für die Verwendung in Energiespeicherzellen sehr geeignet ist.

Prinzipiell können auch andere Materialien für die hydrophobe Beschichtung verwendet werden. Beispielsweise eignen sich Polyetherketone (PEK) oder hydrophobe Polyethersulfone als hydrophobes Beschichtungsmaterial. Besonders geeignet ist beispielsweise Polyetheretherketon (PEEK).

In besonders bevorzugter Weise zeichnet sich die erfindungsgemäße Metall-Luft-Zelle durch mindestens eines der unmittelbar folgenden zusätzlichen Merkmale a. und b. aus:
a. Die hydrophobe Beschichtung basiert auf einer Beschichtung mit einer Dispersion von Polytetrafluorethylen in einem Dispergiermittel, insbesondere einer Dispersion in einem wässrigen Dispergiermittel, insbesondere in Wasser;
b. die hydrophobe Beschichtung basiert auf einer Beschichtung mit einer Dispersion von Polytetrafluorethylen in einem Dispergiermittel, insbesondere einer Dispersion in einem wässrigen Dispergiermittel, insbesondere in Wasser, wobei der Feststoffanteil von Polytetrafluorethylen in dem Dispergiermittel in einem Bereich von 5 bis 75 Gew.-%, vorzugsweise von 15 bis 60 Gew.-%, besonders bevorzugt 30 ± 2 Gew.-%, liegt.

Bei der hydrophoben Beschichtung handelt es sich vorzugsweise um eine partikuläre Beschichtung. In besonders bevorzugter Weise umfasst die Beschichtung PTFE-Partikel mit einer durchschnittlichen Größe (d50) im Bereich von 0,04-1 µm. Ein besonders bevorzugter Größenbereich für den d50-Wert liegt im Bereich von 0,10 - 0,30 µm. Besonders beträgt der Anteil an PTFE-Partikeln in der Dispersion mit einer Größe < 0,04 µm weniger als 10%. Weiterhin ist bevorzugt, dass der Anteil an PTFE-Partikeln in der Dispersion mit einer Größe > 1 µm weniger als 10 % beträgt.

Entsprechende Dispersionen von Polytetrafluorethylen insbesondere in Wasser lassen sich einfach herstellen und verarbeiten. Prinzipiell sind auch andere Dispergiermittel möglich. Wasser als Dispergiermittel ist jedoch besonders bevorzugt, da es kostengünstig verfügbar und im Allgemeinen ohne weitere Sicherheitsvorkehrungen zu verwenden ist. Als Ausgangspunkt für die Herstellung einer geeigneten Dispersion kann beispielsweise eine Ausgangsdispersion mit einem 60-%igen Feststoffanteil von PTFE verwendet werden. Diese Ausgangsdispersion kann mit Wasser gemischt und für die Beschichtung verwendet werden.

Umso höher der Gewichtsanteil von Polytetrafluorethylen in der Dispersion ist, desto hydrophober wird die Beschichtung und umso effektiver kann ein Auslaufen des Elektrolyten verhindert werden. Dabei ist es jedoch besonders bevorzugt, dass der Gewichtsanteil von Polytetrafluorethylen in der Dispersion nicht über 75 Gew.-% liegt, da bei einer Beschichtung mit einer höherprozentigen Dispersion die Luftdurchlässigkeit des Luftverteilers deutlich abnehmen kann und damit die Luftverteilungseigenschaften des Luftverteilers gegebenenfalls nicht mehr optimal sind. Besonders bevorzugt liegt der Gewichtsanteil von Polytetrafluorethylen in einem Bereich von 5 bis 75 Gew.-%. Ganz besonders bevorzugt ist ein Bereich von 15 bis 60 Gew.-%. In besonders bevorzugten Ausführungsformen liegt die Konzentration bzw. der Gewichtsanteil von Polytetrafluorethylen in dem Dispergiermittel bei 30 ± 2 Gew.-%. Diese prozentualen Angaben beziehen sich dabei auf den Feststoffanteil von Polytetrafluorethylen in der Dispersion, die für die Beschichtung verwendet wird.

In besonders bevorzugter Weise zeichnet sich die erfindungsgemäße Metall-Luft-Zelle durch das folgende zusätzliche Merkmal a. aus:
a. Derschichtförmige Luftverteilerumfassteine luftdurchlässige Matrix,dieauseinem hydrophilen Material gebildet ist.

In besonders bevorzugten Ausführungsformen zeichnet sich die erfindungsgemäße Metall-Luft-Zelle im Hinblick auf die luftdurchlässige Matrix durch mindestens eines der unmittelbar folgenden zusätzlichen Merkmale a. bis d. aus:
a. Die luftdurchlässige Matrix ist ein Faservlies;
b. die luftdurchlässige Matrix ist von einem Fasergemisch gebildet, wobei vorzugsweise das Fasergemisch Fasern aus Polyvinylalkohol umfasst, insbesondere in einem Anteil von mindestens 50 Gew.-%;
c. die luftdurchlässige Matrix weist im unbeschichteten Zustand ein Flächengewicht in einem Bereich von 20 bis 30 g/m³, vorzugsweise in einem Bereich von 24 bis 26 g/m³, auf;
d. die luftdurchlässige Matrix weist im unbeschichteten Zustand eine Luftdurchlässigkeit in einem Bereich von 20.000 bis 40.000 cm³/cm^{2*}min, vorzugsweise in einem Bereich von 25.000 bis 35.000 cm³/cm^{2*}min, besonders bevorzugt in einem Bereich von 29.000 bis 30.000 cm³/cm^{2*}min, auf.

In besonders bevorzugter Weise sind die unmittelbar vorgenannten Merkmale a. und b., oder a. und b. und c., oder a. und b. und c. und d. jeweils in Kombination miteinander verwirklicht.

Die Porosität eines besonders geeigneten Faservlieses (vor der Beschichtung) liegt beispielsweise in einem Bereich von 70 bis 90 %, vorzugsweise in einem Bereich um 80 %.

Bei dem Fasergemisch kann es sich beispielsweise um ein Gemisch von Polyvinylalkoholfasern und Rayon-Fasern handeln. Der Anteil der Polyvinylalkoholfasern kann dabei beispielsweise in einem Bereich von 50 - 80 %, vorzugsweise 60 - 70 %, liegen. Der Anteil der Rayon-Fasern kann beispielsweise in einem Bereich von 20 - 50 %, vorzugsweise 30 - 40 %, liegen. In einer besonders bevorzugten Ausführungsform besteht das Fasergemisch zu 65% aus Polyvinylalkoholfasern und zu 35% aus Rayon-Fasern.

Prinzipiell eignen sich für die Herstellung des Fasergemisches alle Fasern, die sich produktionstechnisch gut verarbeiten lassen und die gleichzeitig gegenüber dem beispielsweise alkalischen Elektrolyten der Metall-Luft-Zelle beständig sind und die keinen negativen Einfluss auf die Zellchemie haben.

Die durchschnittliche Länge der einzelnen Fasern kann beispielsweise in einem Bereich von 1 mm bis 10 mm liegen, besonders bevorzugt ist ein Bereich von 3 bis 5 mm, beispielsweise 4 mm.

Allgemein zeichnet sich ein Faservlies dadurch aus, dass es von Fasern begrenzter Länge gebildet ist, die im Prinzip beliebig miteinander verbunden sind, die jedoch nicht durch Weben oder Wirken oder Ähnliches strukturiert sind. Unter einem Faservlies ist daher auch ein Papierzu verstehen.

Für die Zwecke der Erfindung ist es besonders bevorzugt, dass die luftdurchlässige Matrix von einem Fasergemisch gebildet wird, das hydrophiler ausgebildet ist als ein Faservlies aus PTFE. Hierzu umfasst es bevorzugt Fasern aus einem Polymer, das hydrophiler als PTFE ist, beispielsweise aus Polyvinylalkohol oder aus einem Polyvinylalkohol-Derivat. Diese Fasern umfasst es bevorzugt in einem Anteil von mindestens 50 %. Die benötigten hydrophoben Eigenschaften werden dem Vlies durch die erfindungsgemäße Beschichtung mit der PTFE-Dispersion verliehen.

Besonders bevorzugt ist ein Vlies, wenn es zu wesentlichen Anteilen Fasern aus Polyvinylalkohol enthält. Ein derartig herstellbares Faservlies eignet sich in besonderer Weise für die Herstellung eines schichtförmigen Luftverteilers gemäß der Erfindung, da sich damit bezüglich der Stabilität, der Luftdurchlässigkeit und der Beschichtung mit der PTFE-Dispersion besonders gute Ergebnisse im Hinblick auf die Vermeidung eines Auslaufens der resultierenden Zellen und im Hinblick auf eine optimale Luftverteilung innerhalb der Zellen erzielen lassen.

Ein Flächengewicht der luftdurchlässigen Matrix im unbeschichteten Zustand im Bereich um 25 g/m² ist für die Zwecke der Erfindung besonders geeignet, da mit einer solchen Stärke des Materials für die luftdurchlässige Matrix des Luftverteilers sehr gute Ergebnisse im Hinblick auf die Eigenschaften der resultierenden Metall-Luft-Zelle erzielt wurden. Das Gleiche gilt für die Luftdurchlässigkeit der Matrix im unbeschichteten Zustand, die in einem Bereich von 29.000 bis 30.000 cm³/cm^{2*}min zu besonders guten Ergebnissen bei der damit hergestellten Metall-Luft-Zelle führte.

In besonders bevorzugter Weise weist der schichtförmige Luftverteiler gemäß der Erfindung eine beidseitige Beschichtung auf. In besonders einfacher und praktikabler Weise kann eine derartige Beschichtung des Luftverteilers durch einen Tauchvorgang erzielt werden, indem die luftdurchlässige Matrix des Luftverteilers in eine entsprechende Dispersion mit PTFE eingetaucht wird. Anschließend kann eine Trocknung, beispielsweise bei Raumtemperatur, vorgesehen sein. Dieser Vorgang lässt sich sehr gut automatisieren, so dass er auch für eine Massenproduktion bei der Herstellung der Metall-Luft-Zellen geeignet ist. Vorteilhafterweise werden größere Abschnitte des flächigen Materials der luftdurchlässigen Matrix in einem Tauchvorgang beschichtet. Die erforderliche Form für den Luftverteiler kann anschließend beispielsweise durch einen Stanzvorgang hergestellt werden.

Prinzipiell ist es auch möglich, dass der schichtförmige Luftverteiler auf nur einer Seite mit der hydrophoben Beschichtung versehen ist. In diesen Ausführungsformen ist es von Vorteil, wenn sich die Seite mit der hydrophoben Beschichtung in Richtung der Luftkathode befindet. In dieser Ausführungsform wird in besonders zuverlässiger Weise ein Auslaufen des Elektrolyten vermieden, da diejenige Seite des schichtförmigen Luftverteilers hydrophob beschichtet ist, die mit dem Elektrolyten in erster Linie in Kontakt kommt.

In besonders bevorzugten Ausführungsformen der erfindungsgemäßen Metall-Luft-Zelle zeichnet sich die Zelle im Hinblick auf den schichtförmigen Luftverteiler durch das unmittelbar folgende zusätzliche Merkmal aus:
a. Der schichtförmige Luftverteiler weist ein Flächengewicht in einem Bereich von 40 bis 160 g/m², vorzugsweise in einem Bereich von 45 bis 100 g/m², besonders bevorzugt in einem Bereich von 60 bis 70 g/m², auf.

Besonders gute Ergebnisse haben sich mit einem Flächengewicht im Bereich um 65 ± 2 g/m² bei dem beschichteten Luftverteiler im Hinblick auf die Eigenschaften der damit ausgestatteten Metall-Luft-Zelle ergeben. In diesem Bereich des Flächengewichts des beschichteten Materials, bei dem die unbeschichtete luftdurchlässige Matrix eine Luftdurchlässigkeit in einem Bereich um 29.000 cm³/cm^{2*}min aufweist, wirkt sich die hydrophobe Beschichtung, die vorzugsweise mit einer30 Gew.-%igen Dispersion von PTFE in Wasser hergestellt wird, nicht nachteilig auf die Luftdurchlässigkeit aus. Das heißt, die Luftdurchlässigkeit ist trotz der hydrophoben Beschichtung sehr hoch. Andererseits führt die hydrophobe Beschichtung dazu, dass es durch den schichtförmigen Luftverteiler hindurch nicht zu einem Auslaufen der Metall-Luft-Zelle kommt. Bei einem deutlich höheren Flächengewicht des schichtförmigen Luftverteilers, welches durch eine Beschichtung mit einer höherprozentigen PTFE-Dispersion erreicht werden kann, kann gegebenenfalls die Luftdurchlässigkeit des Luftverteilers nachteilig beeinflusst werden, so dass dann nicht mehr die volle Funktionsfähigkeit der hiermit ausgestatteten Metall-Luft-Zelle gewährleistet ist.

In weiteren bevorzugten Ausgestaltungen der erfindungsgemäßen Metall-Luft-Zelle kann mindestens eines der unmittelbar folgenden zusätzlichen Merkmale a. und/oder b. vorgesehen sein:
a. Die Metall-Luft-Zelle umfasst mindestens eine zusätzliche Schicht zwischen der Luftkathode und dem schichtförmigen Luftverteiler;
b. die mindestens eine zusätzliche Schicht ist eine hydrophobe Membran, vorzugsweise eine Membran aus Polytetrafluorethylen.

In besonders bevorzugter Weise sind die unmittelbar vorgenannten Merkmale a. und b. in Kombination miteinander verwirklicht.

Bei der zusätzlichen Schicht zwischen der Luftkathode und dem schichtförmigen Luftverteiler kann es sich beispielsweise um eine PTFE-Membran handeln, die beispielsweise durch Lamination oder ein anderes Fügeverfahren einen Verbund, also beispielsweise ein Laminat, mit der schichtförmigen Luftkathode bildet. In anderen Ausführungsformen kann die PTFE-Membran lose zwischen der Luftkathode und dem Luftverteiler liegen.

Darüber hinaus kann in weiter bevorzugten Ausführungsformen noch eine weitere Schicht, insbesondere eine weitere PTFE-Membran, zwischen dem Luftkathoden-Verbund (Laminat) und dem Luftverteiler vorgesehen sein. Hierdurch kann beispielsweise ein Porengefälle realisiert werden, dass die Luftzufuhr zu der Luftkathode verbessert. Gleichzeitig kann hierdurch ein besonders hohes Maß an Auslaufsicherheit der Metall-Luft-Zelle realisiert werden, dass insbesondere unter extremen Hochfeuchtebedingungen vorteilhaft sein kann. Die weitere PTFE-Membran kann beispielsweise lose zwischen der Luftkathode oder einem Luftkathodenlaminat und dem schichtförmigen Luftverteiler liegen. In anderen Ausführungsformen kann auch die weitere Schicht, also insbesondere die weitere PTFE-Membran, fest (beispielsweise durch Lamination oder andere Fügeverfahren) mit dem Luftkathoden-Verbund verbunden sein, sodass die Luftkathode mit zwei PTFE-Membranen ausgestattet ist.

Vergleichbar mit Luftkathoden bei herkömmlichen Metall-Luft-Zellen umfasst die Luftkathode der erfindungsgemäßen Metall-Luft-Zelle als elektrokatalytisch aktives Material vorzugsweise mindestens ein Edelmetall, insbesondere Platin und/oder Palladium und/oder Manganoxid, wobei Manganoxid besonders bevorzugt ist.

Vorzugsweise wird die schichtförmige Luftkathode der erfindungsgemäßen Metall-Luft-Zelle von einer porösen Matrix aus einem Kunststoff (Kunststoffbinder), insbesondere aus PTFE, und Partikeln aus dem elektrokatalytisch aktiven Material gebildet. Zusätzlich kann beispielsweise Ruß als Leitvermittler enthalten sein. Bei der Herstellung können diese Substanzen als Trockenmischung bereitgestellt werden und durch einen Walzprozess in eine schichtförmige Form gebracht werden. Vorzugsweise umfasst die Luftkathode darüber hinaus ein metallisches Netz, beispielsweise aus Silber, Nickel oder versilbertem Nickel. Alternativ können metallische Gitter, Streckmetalle, metallisierte Vliese oder ähnliche elektrische Leiter verwendet werden, so dass eine metallische Ableiterstruktur gebildet wird. In der Herstellung kann die Trockenmischung mit dem Kunststoffbinder und den Katalysatorpartikeln sowie gegebenenfalls dem Ruß oder Ähnlichem auf dieser Struktur ausgewalzt werden. Anschließend können aus dieser flächigen Struktur Kreise oder ähnliche Formen ausgestanzt werden, die als Luftkathode in das Gehäuse einer herzustellenden Metall-Luft-Zelle eingesetzt werden können.

Die Luftkathode kann dabei in Form einer Kathodenscheibe mit einem umlaufenden Kathodenscheibenrand ausgebildetsein. Diese Kathodenscheibe kann derart in dem Gehäuse der Metall-Luft-Zelle angeordnet werden, dass der Kathodenscheibenrand entlang einer umlaufenden Kontaktzone an der Innenseite eines Mantelbereichs des Gehäuses anliegt. Dabei ist es zweckmäßigerweise vorgesehen, dass die metallische Ableiterstruktur der Luftkathode, also beispielsweise das Silbernetz oderÄhnliches, an dem Kathodenscheibenrand aus der Kathodenscheibe austritt. An diesen Stellen kann eine elektrisch leitende Verbindung zum Gehäuse der Metall-Luft-Zelle realisiert werden, wobei die daraus resultierende Verbindung der Luftkathode die Polung des Gehäuses bestimmt.

Auch die metallbasierte Anode der erfindungsgemäßen Metall-Luft-Zelle kann vergleichbar mit herkömmlichen Metall-Luft-Zellen ausgestaltet sein. Vorzugsweise umfasst die metallbasierte Anode dabei als elektrokatalytisch aktives Material ein metallisches Pulver, insbesondere ein Pulver aus metallischem Zink und/oder Aluminium und/oder Magnesium. Besonders bevorzugt ist hierbei Zink, oder eine Zinklegierung, so dass es sich in besonders bevorzugten Ausführungsformen der erfindungsgemäßen Metall-Luft-Zelle um eine Zink-Luft-Zelle handelt. Grundsätzlich können aber auch andere oxidierbare Metalle, wie beispielsweise Aluminium und/oder Magnesium, an Stelle von Zink verwendet werden.

Bei der Herstellung der erfindungsgemäßen Metall-Luft-Zelle kann das Material für die metallbasierte Anode beispielsweise in Form einer Paste in das Gehäuse eingebracht werden.

In Bezug auf das Gehäuse zeichnet sich die erfindungsgemäße Metall-Luft-Zelle vorzugsweise durch mindestens eines der unmittelbar folgenden zusätzlichen Merkmale a. bis e. aus:
a. Das erste Gehäuseteil, im Folgenden als Zellenbecher bezeichnet, ist becherförmig ausgebildet und weist einen Becherboden auf;
b. das zweite Gehäuseteil, im Folgenden als Zellendeckel bezeichnet, ist becherförmig ausgebildet;
c. das erste Gehäuseteil und/oder das zweite Gehäuseteil bestehen aus einem metallischen Material, insbesondere aus Stahl, vorzugsweise vernickeltem Stahl, und/oder aus Blech und/oder aus einem Trimetall, vorzugsweise aus einem Trimetall mit Nickel, Stahl und Kupfer;
d. zwischen dem ersten Gehäuseteil und dem zweiten Gehäuseteil ist mindestens eine elektrisch isolierende Dichtung vorgesehen;
e. die mindestens eine Luftdurchtrittsöffnung weist einen Öffnungsdurchmesser in einem Bereich von 10 bis 500 µm auf.

Vorzugsweise sind die unmittelbar vorgenannten Merkmale a. und b. und c., besonders bevorzugt a. und b. und c. und d., in Kombination miteinander verwirklicht. Darüber hinaus ist bei diesen Ausgestaltungen vorzugsweise auch das Merkmal e. verwirklicht.

In weiteren bevorzugten Ausführungsformen kann es vorgesehen sein, dass mehr als eine Luftdurchtrittsöffnung im Gehäuse der erfindungsgemäßen Metall-Luft-Zelle vorgesehen ist. Die Luftdurchtrittsöffnungen können dabei mit besonderem Vorteil über die Fläche des Becherbodens des Zellenbechers verteilt sein, um so eine besonders gleichmäßig verteilte Eintrittsmöglichkeit für den Luftsauerstoff zu ermöglichen. Im Allgemeinen ist es jedoch ausreichend, wenn nur eine Luftdurchtrittsöffnung vorgesehen ist, zumal der schichtförmige Luftverteiler gemäß der Erfindung eine besonders gute und gleichmäßige Verteilung des über den Becherboden eintretenden Luftsauerstoffs erlaubt.

In besonders bevorzugten Ausführungsformen der erfindungsgemäßen Metall-Luft-Zelle handelt es sich bei der Zelle um eine Knopfzelle, also um eine zylindrische Zelle mit einer runden oder ovalen Grundfläche und einer Höhe, die kleiner als der Durchmesser der Grundfläche ist. Gleichwohl ist es auch möglich, dass die erfindungsgemäße Metall-Luft-Zelle eine andere Form hat.

Insbesondere in der Ausführungsform als Knopfzelle umfasst das Gehäuse der Metall-Luft-Zelle den genannten Zellenbecher und den genannten Zellendeckel sowie zweckmäßigerweise eine Dichtung. Der Zellenbecher und der Zellendeckel bilden hierbei die Pole der Zelle.

Der Zellenbecher weist neben dem Bodenbereich bevorzugt einen ringförmigen Mantelbereich und bevorzugt weiterhin eine den Bodenbereich und den Mantelbereich trennende umlaufende Kante auf. Die Kante kann hierbei scharf ausgebildet sein oder auch abgerundet.

Der Zellendeckel ist bevorzugt ähnlich aufgebaut. Erweist in der Regel ebenfalls einen Bodenbereich und einen ringförmigen Mantelbereich auf. An Stelle einer umlaufenden Kante kann er allerdings auch einen bevorzugt schulterförmigen Übergangsbereich aufweisen.

Der Zellenbecher und jeder seiner Bereiche weist eine in den Innenraum des Zellgehäuses weisende Innenseite sowie eine entgegengesetzt gerichtete Außenseite auf. Gleiches gilt auch für den Zellendeckel und jeden seiner Bereiche.

Bevorzugt weisen sowohl der Zellenbecher als auch der Zellendeckel eine umlaufende Schnittkante auf, die den Öffnungsrand des Zellenbechers sowie des Zellendeckels bildet. In bevorzugten Ausführungsformen kann die Schnittkante des Zellendeckels endständig umgeschlagen sein, so dass sich ein doppelwandiger Öffnungsrand ergibt. Der Öffnungsrand begrenzt den jeweiligen Mantelbereich und definiert jeweils eine Öffnung, über die das Innere von Zellenbecher und Zellendeckel zugänglich ist.

In bevorzugten Ausführungsformen sind die Bodenbereiche von Zellenbecher und Zellendeckel eben ausgebildet und weisen eine kreisförmige oder ovale Geometrie auf. Gleiches gilt bevorzugt auch für die von dem Öffnungsrand definierte Öffnung.

Besonders bevorzugt sind die ebenen Bodenbereiche von Zellenbecher und Zellendeckel in dem Gehäuse parallel zueinander angeordnet.

Die ringförmigen Mantelbereiche von Zellenbecher und Zellendeckel weisen bevorzugt eine kreisförmige oder ovale Geometrie auf. In der Regel sind die ringförmigen Mantelbereiche oder zumindest ein axiales Segment der ringförmigen Mantelbereiche orthogonal oder zumindest im Wesentlichen orthogonal zu den dazugehörigen Bodenbereichen ausgerichtet. Die Höhen der Mantelbereiche sind in Umfangsrichtung bevorzugt jeweils konstant.

Im Falle des Zellenbechers ist es bevorzugt, dass der Mantelbereich in einem Winkel vom 90° auf den Bodenbereich stößt. Die Kante des Zellenbechers bildet in diesem Fall bevorzugt eine scharfe Grenze zwischen dem Boden- und dem Mantelbereich des Zellenbechers. Anders beim Zellendeckel: Obwohl in bevorzugten Ausführungsformen der Bodenbereich des Zellendeckels mit dem ringförmigen Mantelbereich des Zellendeckels oder zumindest einem axialen Segment des Mantelbereichs ebenfalls einen Winkel von 90° einschließt, ist es bevorzugt, dass die Bereiche nicht unmittelbar aufeinanderstoßen. Die sich ergebende Lücke wird von dem bevorzugt schulterförmigen Übergangsbereich ausgefüllt.

In der Regel ist der Zellendeckel mit der Schnittkante bzw. dem Öffnungsrand voran in den Zellenbecher eingeschoben. Die Dichtung trennt den Zellenbecher und den Zellendeckel voneinander. Sie gewährleistet dabei, dass die beiden Gehäuseteile elektrisch gegeneinander isoliert sind. Darüber hinaus dichtet sie das Gehäuse nach außen ab und verhindert ein Auslaufen von Elektrolyt in dem Grenzbereich zwischen Zellenbecher und Zellendeckel.

Das aus dem Zellenbecher und dem Zellendeckel zusammengesetzte Gehäuse weist bevorzugt eine zylindrische Grundgeometrie auf. In der Regel bildet der Bodenbereich des Zellenbechers eine flache Unterseite des Gehäuses während der Bodenbereich des Zellendeckels eine flache Oberseite des Gehäuses bildet. Seitlich wird das Gehäuse durch den Mantelbereich des Zellenbechers begrenzt.

In bevorzugten Ausführungsformen ist das Gehäuse durch eine Bördelung verschlossen. Hierzu wird ein endständiges Segment des Mantelbereichs des Zellenbechers einschließlich des den Mantelbereich begrenzenden Öffnungsrands radial nach innen eingedrückt, so dass eine Verringerung des Querschnitts der von dem Öffnungsrand definierten Öffnung resultiert. Der umgebördelte Öffnungsrand liegt in bevorzugten Ausführungsformen auf dem Übergangsbereich des Zellendeckels bzw. auf einer in diesem Bereich aufgebrachten Dichtung auf. Durch das Umbördeln werden der Zellenbecher und der Zellendeckel in der Regel formschlüssig miteinander verbunden.

Wie erwähnt sind sowohl der Zellenbecher als auch der Zellendeckel vorzugsweise aus metallischen Materialien gefertigt, beispielsweise durch Tiefziehprozesse. Geeignet sind beispielsweise vernickeltes Tiefziehblech oder plattiertes Verbundmaterial mit einer Lage Nickel, einer Lage Kupfer und einer dazwischenliegenden Lage aus Stahl bzw. Edelstahl (sogenanntes Trimetall).

Bei der Dichtung handelt es sich bevorzugt um eine Foliendichtung, wie sie z. B. in der DE 196 47 593 A1 beschrieben ist. Bevorzugt kommen Foliendichtungen aus einem Thermoplast zum Einsatz. Als Material eignen sich beispielsweise Polyamid oder Polyetheretherketon. Alternativ kann es sich bei der Dichtung allerdings auch um eine klassische Spritzgussdichtung, beispielsweise ebenfalls aus einem Polyamid handeln.

Bei einem bevorzugten Aufbau der erfindungsgemäßen Metall-Luft-Zelle ist der Bodenbereich des Zellenbechers eben ausgebildet. In dem Bodenbereich, der mit der oder den Luftdurchtrittsöffnung(en) ausgestattet ist, liegt im Inneren der Zelle der schichtförmige Luftverteiler mit der hydrophoben Beschichtung. Auf den Luftverteiler folgt die Luftkathode, die gegebenenfalls als Laminat mit einer PTFE-Membran oder einer anderen hydrophoben Membran ausgebildet sein kann, wobei die gegebenenfalls vorhandene Membranseite der Luftkathode dem Luftverteiler zugewandt ist. Gegebenenfalls kann zwischen dem Luftkathodenlaminat und dem schichtförmigen Luftverteiler eine weitere hydrophobe Schicht, insbesondere eine weitere PTFE-Membran, vorgesehen sein. Dann folgt ein schichtförmiger Separator, der als Separatorscheibe ausgebildet sein kann, der auf der Luftkathode aufliegt. Die Separatorscheibe ist ebenso wie die gegebenenfalls als Kathodenscheibe ausgebildete Luftkathode in der Regel parallel zum Bodenbereich des Zellenbechers ausgerichtet. Oberhalb des Separators befindet sich die metallbasierte Anode, beispielsweise in Form einer Paste. Nach oben hin wird das Gehäuse mit dem Zellendeckel abgeschlossen, der an die Anode angrenzt.

Die Luftkathode und der Separator können insbesondere in scheibenförmigen Ausführungen bei der Herstellung zunächst aus beispielsweise bandförmigen Folien ausgeschnitten oder ausgestanzt und anschließend sequentiell in den Zellenbecher, bevorzugt auf den Bodenbereich des Zellenbechers eingelegt und/oder eingepresst werden, wobei zuvor auf den Bodenbereich der schichtförmige Luftverteiler eingesetzt wurde. In der Regel sind die beispielsweise scheibenförmige Luftkathode, der beispielsweise scheibenförmige Separator und der ebenfalls beispielsweise scheibenförmige Luftverteiler als Kreisscheiben mit annähernd gleichem Durchmesser ausgebildet. Im Innenraum des Gehäuses der Metall-Luft-Zelle liegen sie dann flach aufeinander.

Typische Ausführungsformen der erfindungsgemäßen Metall-Luft-Zellen in Form einer Knopfzelle zeichnen sich durch eine näherungsweise zylindrische Bauform bei einer Zellhöhe im Bereich von 3,30 mm (Bauform PR70 gemäß der Internationalen Elektrotechnischen Kommission, kurz IEC 60082-2) bis 5,40 mm (Bauform PR44 gemäß IEC) und einen Zelldurchmesser im Bereich von 5,65 mm (Bauform PR70 gemäß IEC) und 11,60 mm (Bauform PR44 gemäß IEC) aus.

Die Erfindung umfasst weiterhin ein Verfahren zur Herstellung eines schichtförmigen Luftverteilers, der für eine Metall-Luft-Zelle gemäß der obigen Beschreibung vorgesehen ist. Das Verfahren zur Herstellung des schichtförmigen Luftverteilers ist durch die unmittelbar folgenden Schritte a. bis c. gekennzeichnet:
a. Es wird eine luftdurchlässige Matrix bereitgestellt; und
b. die luftdurchlässige Matrix wird mit einer hydrophoben Beschichtung versehen; wobei
c. für die hydrophobe Beschichtung vorzugsweise eine Dispersion von Polytetrafluorethylen in einem Dispergiermittel, insbesondere eine Dispersion von Polytetrafluorethylen in einem wässrigen Dispergiermittel, beispielsweise in Wasser, verwendet wird.

Im Hinblick auf weitere Einzelheiten zu diesem Verfahren und insbesondere im Hinblick auf die Merkmale der luftdurchlässigen Matrix und der hydrophoben Beschichtung und die damit verbundenen Vorteile gegenüber herkömmlichen Luftverteilern wird auch auf die obige Beschreibung verwiesen. In besonders bevorzugten Ausgestaltungen des erfindungsgemäßen Verfahrens ist das Verfahren durch das unmittelbar folgende zusätzliche Merkmal a. gekennzeichnet:
a. Die Dispersion von Polytetrafluorethylen weist einen Feststoffanteil von Polytetrafluorethylen in dem Dispergiermittel in einem Bereich von 5 bis 75 Gew.-%, vorzugsweise von 15 bis 60 Gew.-%, besonders bevorzugt 30 ± 2 Gew.-%, auf.

In besonders bevorzugten Ausführungsformen wird die Beschichtung durch Tauchen realisiert. Ein Tauchprozess hat zum einen den Vorteil, dass die Beschichtung mit dieser Methode sehr einfach, zuverlässig und mit wenig Aufwand durchführbar ist. Zum anderen werden hiermit sehr gleichbleibende und reproduzierbare Ergebnisse erzielt, ohne dass ein erheblicher apparativer Aufwand erforderlich wäre. Im Rahmen des Tauchprozesses können verhältnismäßig große Abschnitte der luftdurchlässigen Matrix in einem Vorgang auf beiden Seiten beschichtet werden. Anschließend können die erforderlichen Formen für den Luftverteiler beispielsweise ausgeschnitten oder ausgestanzt werden.

Für die Durchführung des Tauchprozesses kann die luftdurchlässige Matrix, beispielsweise ein Faservlies, für wenige Sekunden (z. B. für 1 - 10 s) in die PTFE-Dispersion getaucht werden. Anschließende erfolgt vorzugsweise eine Trocknung, die beispielsweise bei Raumtemperatur bzw. Umgebungsbedingungen erfolgen kann.

Die Erfindung umfasst weiterhin die Verwendung eines schichtförmigen Luftverteilers, der eine luftdurchlässige Matrix mit einer hydrophoben Beschichtung aufweist, zur Herstellung einer Metall-Luft-Zelle. Bei der so herstellbaren Zelle handelt es sich insbesondere um eine Metall-Luft-Zelle gemäß derobigen Beschreibung. Weitere Einzelheiten zu dieser Verwendung bzw. zu einem Verfahren zur Herstellung einer Metall-Luft-Zelle unter Verwendung des schichtförmigen Luftverteilers gemäß der Erfindung ergeben sich gleichfalls aus der obigen Beschreibung.

Insbesondere werden bei diesem Verfahren die Gehäuseteile für die Metall-Luft-Zelle bereitgestellt. In die Gehäuseteile werden der schichtförmige Luftverteiler, gegebenenfalls zusätzliche Schichten, die Luftkathode, der gegebenenfalls mit dem Elektrolyten getränkte Separator und die metallbasierte Anode eingebracht und das Gehäuse verschlossen und gegebenenfalls isoliert und/oder abgedichtet. Geeignete Herstellungsverfahren hierfür sind dem Fachmann bekannt.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In der Figur zeigt:

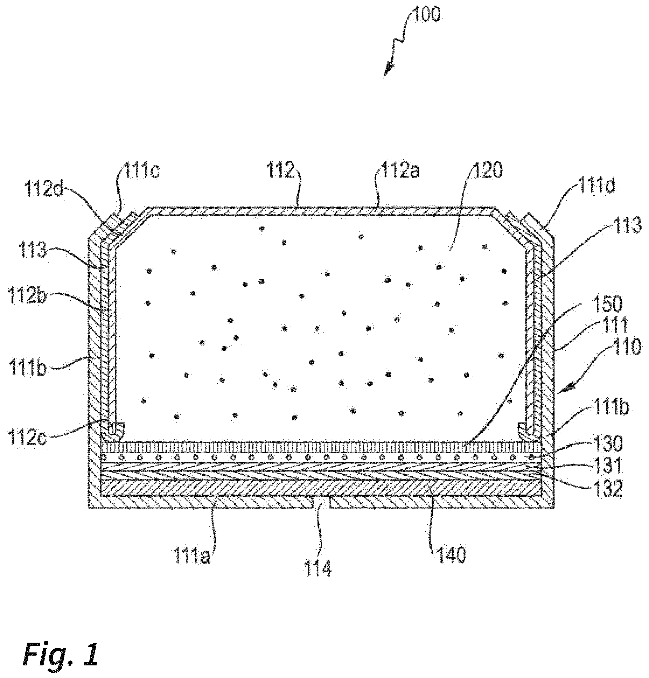

- Fig. 1: schematische Schnittdarstellung durch eine Ausführungsform einer erfindungsgemäßen Metall-Luft-Zelle.

### DETAILLIERTE BESCHREIBUNG DER AUSFÜHRUNGSBEISPIELE

**Fig. 1** zeigt einen Querschnitt durch eine vom prinzipiellen Aufbau her aus dem Stand der Technik bekannte Metall-Luft-Zelle 100 in Knopfzellenform, wobei diese Metall-Luft-Zelle 100 mit einem schichtförmigen Luftverteiler 140 mit einer hydrophoben Beschichtung gemäß der Erfindung ausgestattet ist.

Die Metall-Luft-Zelle 100 umfasst ein metallisches Gehäuse 110, welches sich aus einem Zellenbecher 111 (erstes Gehäuseteil), einem Zellendeckel 112 (zweites Gehäuseteil) und einer Dichtung 113 zusammensetzt. Der Zellenbecher 111 weist einen beispielsweise kreisförmig ausgebildeten Bodenbereich 111a und einen ringförmigen Mantelbereich 111b auf. Endständig wird der Mantelbereich 111b durch die Schnittkante 111c begrenzt, die den Öffnungsrand des Zellenbechers 111 bildet.

Der Zellendeckel 112 weist einen beispielsweise kreisförmig ausgebildeten Bodenbereich 112a und einen ringförmigen Mantelbereich 112b auf. Der Bodenbereich 112a des Zellendeckels 112 und der Mantelbereich 112b des Zellendeckels 112 sind durch einen umlaufenden Übergangsbereich 112d verbunden. Endständig wird der Mantelbereich 112b durch die Schnittkante 112c begrenzt, die den Öffnungsrand des Zellendeckels 112 bildet.

Der Zellendeckel 112 ist mit der Schnittkante 112c voran in den Zellenbecher 111 eingeschoben. Eine Dichtung 113 trennt den Zellenbecher 111 und den Zellendeckel 112 voneinander. Sie gewährleistet eine elektrische Isolierung der beiden Gehäuseteile (Zellenbecher 111 und Zellendeckel 112) gegeneinander. Darüber hinaus dichtet sie das Gehäuse 110 ab und verhindert ein Auslaufen des Elektrolyten.

Der Zellenbecher 111 und der Zellendeckel 112 werden mithilfe einer Bördelung zu einem geschlossenen Gehäuse 110 verbunden, wobei die Bördelung in dem Bereich eines endständigen Segments 111d des Mantelbereichs 111b des Zellenbechers 111 erfolgt, indem das endständige Segment 111d nach dem Einschieben des Zellendeckels 112 radial nach innen gedrückt wird.

Im Bodenbereich 111a des Zellenbechers 111 ist eine Luftdurchtrittsöffnung 114 an zentraler Position des Bodenbereichs vorgesehen. Über die Luftdurchtrittsöffnung 114 kann Luftsauerstoff in den Innenraum der Metall-Luft-Zelle eindringen. Oberhalb der Luftdurchtrittsöffnung 114 befindet sich der schichtförmige Luftverteiler 140, der zumindest auf einer Seite hydrophob beschichtet ist. An den Luftverteiler 140 schließt sich die schichtförmige Luftkathode 130 an, wobei zwischen dem Luftverteiler 140 und der Luftkathode 130 ein oder zwei zusätzliche Schichten, insbesondere PTFE-Membranen 131 und 132, vorgesehen sein können. Die der Luftkathode 130 am nächsten liegende PTFE-Membran 131 kann zusammen mit der Luftkathode 130 ein Laminat bilden. Oberhalb der Luftkathode 130 ist ein schichtförmiger Separator 150 angeordnet, der die Luftkathode 130 von der oberhalb des Separators 150 angeordneten metallbasierten Anode 120 trennt.

Bei der metallbasierten Anode handelt es sich bevorzugt um eine Zinkpaste. Die Anode 120 steht mit dem Zellendeckel 112 in unmittelbarem Kontakt. Der Zellendeckel 112 bildet dementsprechend den negativen Pol der Metall-Luft-Zelle 100. Der Separator 150 ist beispielsweise mit einem alkalischen Elektrolyten getränkt, so dass Hydroxidionen von der Luftkathode 130 zu der Anode 120 wandern können. Die Luftkathode 130 ist mit einer hier nicht näher dargestellten metallischen Ableiterstruktur versehen, die elektrisch mit dem Zellenbecher 111 verbunden ist. Entsprechend bildet der Zellenbecher 111 den positiven Pol der Metall-Luft-Zelle 100.

Kernpunkt der Erfindung ist die hydrophobe Beschichtung des schichtförmigen Luftverteilers 140. Dabei besteht der Luftverteiler 140 vorzugsweise aus einer luftdurchlässigen Matrix, die insbesondere aus einem hydrophilen Material besteht. Besonders bevorzugt ist hierbei ein Faservlies, das aus einem Fasergemisch gebildet ist, wobei das Fasergemisch zum überwiegenden Anteil Fasern aus Polyvinylalkohol umfasst, insbesondere mit einem Anteil der Polyvinylalkohol-Fasern von 50 Gew.-% oder mehr. Diese luftdurchlässige Matrix ist mit einer Dispersion von Polytetrafluorethylen in Wasser beschichtet. Der Feststoffgehalt von Polytetrafluorethylen in der Dispersion liegt vorzugsweise in einem Bereich von 5 % bis 75 %, besonders bevorzugt ist ca. 30 %. Durch die hydrophobe Beschichtung der luftdurchlässigen Matrix wird ein zuverlässiges Zurückhalten des Elektrolyten im Inneren der Metall-Luft-Zelle auch in feuchten Umgebungen gewährleistet, wobei zugleich eine gute Verteilung des über die Luftdurchtrittsöffnung 114 eintretenden Luftsauerstoffs über die gesamte Fläche der Metall-Luft-Zelle 100 sichergestellt wird.

Als luftdurchlässige Matrix wurde ein Faservlies mit den folgenden Eigenschaften verwendet (Faservlies Typ PA 125 S von Schweitzer-Mauduit International Inc., USA):

| | |
|---|---|
| Gewicht | 24,8 g/m² |
| Dicke (bei 100 kPa) | 88 µm |
| Zugfestigkeit | 2.100 cN/15 mm |
| Dochteffekt KOH | 50 mm/10 mn |
| Absorption | 145 g/m² |
| Schrumpfung | 0%MD |
| | 0%CD |
| Luftdurchlässigkeit | 29.360 cm³/cm^{2*}min (1 kPa) |
| R. Index | 0,75 |

Diese Messwerte des Faservlieses beziehen sich auf Messungen bei einer Temperatur von 23 °C und einer Luftfeuchtigkeit von 50 %.

Das Faservlies wurde mit unterschiedlich konzentrierten PTFE-Dispersionen in einem Tauchverfahren beschichtet und das Flächengewicht und die Luftdurchlässigkeit nach Gurley im Vergleich mit einem nicht beschichteten Faservlies und einer PTFE-Membran gemessen. Für die Herstellung der Dispersionen mit unterschiedlichen PTFE-Konzentrationen wurde eine Ausgangsdispersion auf wässriger Basis mit 60% PTFE-Feststoffgehalt verwendet. Dieses Ausgangsdispersion wurde mit Wasser gemischt. Auf diese Weise wurden Mischungen mit ca. 6 Gew.-% PTFE (10% PTFE-Ausgangsdispersion + 90 % Wasser), mit ca. 15 Gew.-% PTFE (25% PTFE-Ausgangsdispersion + 75 % Wasser), mit ca. 30 Gew.-% PTFE (50% PTFE-Ausgangsdispersion +: 50 % Wasser) und mit ca. 60 Gew.-% PTFE (100% PTFE-Ausgangsdispersion) bereitgestellt. Diese Mischungen wurden für die Beschichtungdes Faservlies in einem Tauchverfahren verwendet. Für den Tauchprozess wurde das Faservlies für 1 - 10 s in die jeweilige PTFE-Dispersion getaucht und anschließend bei Raumtemperatur getrocknet.

Bei der Messmethode nach Gurley zur Erfassung der Luftdurchlässigkeit wird die Zeit erfasst, bis zu der das jeweilige Medium, also Luft, unter definierten Bedingungen das Prüfmaterial durchflossen hat. Umso länger die Zeit ist, umso schlechter ist das Prüfmaterial durchlässig. Wenn das Prüfmaterial allerdings hochdurchlässig ist, kann keine Zeit gemessen werden, da das Prüfmaterial zu schnell durchflossen ist.

Die folgende Tabelle 1 fasst die Ergebnisse zusammen.

**Tabelle 1: physikalische Eigenschaften des beschichteten Faservlieses**

| | **Luftdurchlässigkeit (Gurley)** | **Flächengewicht** |
|---|---|---|
| Faservlies ohne Beschichtung | nicht messbar da zu hoch | 25 g/m² |
| Faservlies mit ca. 6 Gew.-% PTFE | nicht messbar da zu hoch | 45 g/m² |
| Faservlies mit ca. 15 Gew.-% PTFE | nicht messbar da zu hoch | 48 g/m² |
| Faservlies mit ca. 30 Gew.-% PTFE | nicht messbar da zu hoch | 67 g/m² |
| Faservlies mit ca. 60 Gew.-% PTFE | 24 s | 144 g/m² |
| PTFE-Membran | 75 s | 175 g/m² |

Die Ergebnisse zeigen, dass die mit einer PTFE-Dispersion beschichteten Faservliese bis zu einem Flächengewicht von 67 g/m² eine sehr hohe Luftdurchlässigkeit zeigen. Bei einer Beschichtung des Faservlieses mit einer nicht verdünnten PTFE-Dispersion (60 Gew.-% PTFE, Flächengewicht 144 g/m²) zeigt sich ein schwächender Einfluss auf die Luftdurchlässigkeit, die gegenüber einer Beschichtung mit einer 30 Gew.-%igen PTFE-Dispersion bereits deutlich verringert ist. Demgegenüber zeigt eine reine PTFE-Membran eine noch deutlich schlechtere Luftdurchlässigkeit.

Die nachfolgende Tabelle 2 zeigt die Ergebnisse von Versuchen mit verschiedenen Metall-Luft-Zellen, die jeweils mit unterschiedlich beschichteten Luftverteilern gemäß der Erfindung versehen waren. Für jeden Typ von Luftverteiler wurden drei individuelle Zellen (Zellen Nr. 1, 2,3) über mehrere Tage unter Hochfeuchtebedingungen (90 % relative Luftfeuchtigkeit bei 30 °C) dahingehend beobachtet, ob ein Elektrolytaustritt nach der Entladung festzustellen war (x- Elektrolytaustritt; 0 - kein Elektrolytaustritt).

**Tabelle 2: Elektrolytaustritt nach Entladung unter Hochfeuchtebedingungen**

| Elektrolytaustritt nach Entladung | Zelle Nr. | Tag 1 | Tag 2 | Tag 3 | Tag 4 | Tag 5 | Tag 6 | Tag7 |
|---|---|---|---|---|---|---|---|---|
| Nicht beschichtetes Faservlies | 1 | X | - | - | - | - | - | - |
| | 2 | X | - | - | - | - | - | - |
| | 3 | ○ | ○ | ○ | ○ | ○ | ○ | ○ |
| Faservlies mit einer Beschichtung mit ca. 6 Gew.-% PTFE | 1 | X | - | - | - | - | - | - |
| | 2 | ○ | ○ | ○ | X | - | - | - |
| | 3 | ○ | ○ | ○ | ○ | ○ | ○ | ○ |
| Faservlies mit einer Beschichtung mit ca. 15 Gew.-% PTFE | 1 | ○ | ○ | ○ | X | - | - | - |
| | 2 | ○ | ○ | ○ | X | - | - | - |
| | 3 | ○ | ○ | ○ | ○ | ○ | ○ | ○ |
| Faservlies mit einer Beschichtung mit ca. 30 Gew.-% PTFE | 1 | ○ | ○ | ○ | ○ | ○ | ○ | ○ |
| | 2 | ○ | ○ | ○ | ○ | ○ | ○ | ○ |
| | 3 | ○ | ○ | ○ | ○ | ○ | ○ | ○ |

Die Ergebnisse zeigen, dass bei einem Luftverteiler, der mit einer 30 Gew.-%igen PTFE-Dispersion beschichtet war, in sehr zuverlässiger Weise über einen Zeitraum von sieben Tagen bei allen untersuchten individuellen Zellen dieses Typs ein Elektrolytaustritt zuverlässig verhindert wurde. Bereits auch schon bei einem Luftverteiler mit einer 15 Gew.-%igen PTFE-Dispersionsbeschichtung zeigte sich ein positiver Effekt im Hinblick auf einen Schutz vor einem Elektrolytaustritt, wobei dieser positive Effekt auch schon bei einer Beschichtung des Luftverteilers mit einer 6 Gew.-%igen PTFE-Dispersion in Ansätzen zu beobachten war. Für einen besonders zuverlässigen Schutz vor einem Auslaufen der Metall-Luft-Zellen ist daher eine ca. 30 Gew. %ige PTFE-Dispersion für die Beschichtung des Luftverteilers besonders bevorzugt.

## Patentansprüche

1. Metall-Luft-Zelle (100) mit den folgenden Merkmalen:
a. Die Metall-Luft-Zelle weist ein erstes Gehäuseteil (111) und ein zweites Gehäuseteil (112) auf, die gemeinsam ein Zellgehäuse (110) bilden; und
b. die Metall-Luft-Zelle umfasst eine metallbasierte Anode (120) und eine schichtförmige Luftkathode (130) und einen Elektrolyten; und
c. das erste Gehäuseteil (111) weist mindestens eine Luftdurchtrittsöffnung (114) auf; und
d. zwischen dem ersten Gehäuseteil (111) und der Luftkathode (130) ist ein schichtförmiger Luftverteiler (140) angeordnet; und
e. zwischen der Luftkathode (130) und der metallbasierten Anode (120) ist ein schichtförmiger Separator (150) angeordnet;
**gekennzeichnet durch** die folgenden Merkmale:
f. Derschichtförmige Luftverteiler (140) ist luftdurchlässig ausgebildet und weist eine erste, der Luftkathode (130) zugewandte Seite und eine zweite, der Luftkathode (130) abgewandte Seite auf; und
g. der schichtförmige Luftverteiler (140) weist auf mindestens einer der Seiten eine hydrophobe Beschichtung auf.

2. Metall-Luft-Zelle nach Anspruch 1 mit dem folgenden zusätzlichen Merkmal:
a. Die hydrophobe Beschichtung ist eine Polytetrafluorethylen-Beschichtung.

3. Metall-Luft-Zelle nach Anspruch 1 oder Anspruch 2 mit mindestens einem der folgenden zusätzlichen Merkmale:
a. Die hydrophobe Beschichtung basiert auf einer Beschichtung mit einer Dispersion von Polytetrafluorethylen in einem Dispergiermittel, insbesondere einer Dispersion in einer wässrigen Lösung;
b. die hydrophobe Beschichtung basiert auf einer Beschichtung mit einer Dispersion von Polytetrafluorethylen in einem Dispergiermittel, insbesondere in einem wässrigen Dispergiermittel, wobei der Feststoffanteil von Polytetrafluorethylen in dem Dispergiermittel in einem Bereich von 5 bis 75 Gew.-%, vorzugsweise von 15 bis 60 Gew.-%, besonders bevorzugt 30 ± 2 Gew.-%, liegt.

4. Metall-Luft-Zelle nach einem der vorhergehenden Ansprüche mit dem folgenden zusätzlichen Merkmal:
a. Der schichtförmige Luftverteiler (140) umfasst eine luftdurchlässige Matrix, die aus einem hydrophilen Material gebildet ist.

5. Metall-Luft-Zelle nach Anspruch 4 mit mindestens einem der folgenden zusätzlichen Merkmale:
a. Die luftdurchlässige Matrix ist ein Faservlies;
b. die luftdurchlässige Matrix ist von einem Fasergemisch gebildet, wobei vorzugsweise das Fasergemisch Fasern aus Polyvinylalkohol umfasst, insbesondere in einem Anteil von mindestens 50 Gew.-%,;
c. die luftdurchlässige Matrix weist im unbeschichteten Zustand ein Flächengewicht in einem Bereich von 20 bis 30 g/m³, vorzugsweise in einem Bereich von 24 bis 26 g/m³, auf;
d. die luftdurchlässige Matrix weist im unbeschichteten Zustand eine Luftdurchlässigkeit in einem Bereich von 20.000 bis 40.000 cm³/cm^{2*}min, vorzugsweise in einem Bereich von 25.000 bis 35.000 cm³/cm^{2*}min, besonders bevorzugt in einem Bereich von 29.000 bis 30.000 cm³/cm^{2*}min, auf.

6. Metall-Luft-Zelle nach einem der vorhergehenden Ansprüche mit dem folgenden zusätzlichen Merkmal:
a. Der schichtförmige Luftverteiler (140) weist eine beidseitige Beschichtung auf.

7. Metall-Luft-Zelle nach einem der vorhergehenden Ansprüche mit dem folgenden zusätzlichen Merkmal:
a. Der schichtförmige Luftverteiler (140) weist ein Flächengewicht in einem Bereich von 40 bis 160 g/m², vorzugsweise in einem Bereich von 45 bis 100 g/m², besonders bevorzugt in einem Bereich von 60 bis 70 g/m², auf.

8. Metall-Luft-Zelle nach einem der vorhergehenden Ansprüche mit mindestens einem der folgenden zusätzlichen Merkmale:
a. Die Metall-Luft-Zelle (100) umfasst mindestens eine zusätzliche Schicht (131, 132) zwischen der Luftkathode (130) und dem schichtförmigen Luftverteiler (140);
b. die mindestens eine zusätzliche Schicht (131, 132) ist eine hydrophobe Membran, vorzugsweise eine Membran aus Polytetrafluorethylen.

9. Metall-Luft-Zelle nach einem der vorhergehenden Ansprüche mit dem folgenden zusätzlichen Merkmal:
a. Die Metall-Luft-Zelle (100) ist eine Zink-Luft-Zelle.

10. Metall-Luft-Zelle nach einem der vorhergehenden Ansprüche mit dem folgenden zusätzlichen Merkmal:
a. Die Metall-Luft-Zelle (100) ist eine Knopfzelle.

11. Verfahren zur Herstellung eines schichtförmigen Luftverteilers (140) für eine Metall-Luft-Zelle gemäß einem der Ansprüche 1 bis 10 mit den folgenden Verfahrensschritten:
a. Es wird eine luftdurchlässige Matrix bereitgestellt; und
b. die luftdurchlässige Matrix wird mit einer hydrophoben Beschichtung versehen; wobei
c. für die hydrophobe Beschichtung vorzugsweise eine Dispersion von Polytetrafluorethylen in einem Dispergiermittel, insbesondere in einem wässrigen Dispergiermittel, verwendet wird.

12. Verfahren nach Anspruch 11 mit dem folgenden zusätzlichen Merkmal:
a. Die Dispersion von Polytetrafluorethylen weist einen Feststoffanteil von Polytetrafluorethylen in dem Dispergiermittel in einem Bereich von 5 bis 75 Gew.-%, vorzugsweise von 15 bis 60 Gew.-%, besonders bevorzugt 30 ± 2 Gew.-%, auf.

13. Verfahren nach Anspruch 11 oder Anspruch 12 mit dem folgenden zusätzlichen Merkmal:
a. Die Beschichtung erfolgt durch Tauchen.

14. Verwendung eines schichtförmigen Luftverteilers (140), der eine luftdurchlässige Matrix mit einer hydrophoben Beschichtung aufweist, zur Herstellung einer Metall-Luft-Zelle (100).

15. Verwendung nach Anspruch 14 mit dem folgenden zusätzlichen Merkmal:
a. Die herstellbare Metall-Luft-Zelle (100) weist mindestens eines der Merkmale gemäß einem der Ansprüche 1 bis 10 auf.
